## Europäisches Patentamt
## European Patent Office
## Office européen des brevets

(19)

(11) Veröffentlichungsnummer: **0 143 255**
**B1**

(12) # EUROPÄISCHE PATENTSCHRIFT

(45) Veröffentlichungstag der Patentschrift:
10.05.89

(51) Int. Cl.⁴: **H 04 L 11/00**

(21) Anmeldenummer: **84111476.2**

(22) Anmeldetag: **26.09.84**

(54) Verfahren und Schaltungsanordnung zur zeitlichen Überwachung des Belegtseins von Signalumsetzern.

(30) Priorität: **29.09.83 DE 3335380**

(43) Veröffentlichungstag der Anmeldung:
**05.06.85 Patentblatt 85/23**

(45) Bekanntmachung des Hinweises auf die Patenterteilung:
**10.05.89 Patentblatt 89/19**

(84) Benannte Vertragsstaaten:
**AT CH DE IT LI NL SE**

(56) Entgegenhaltungen:
**EP-A-0 046 259**
**EP-A-0 060 921**
**US-A-4 593 283**

(73) Patentinhaber: **Siemens Aktiengesellschaft Berlin und München, Wittelsbacherplatz 2, D-8000 München 2 (DE)**

(72) Erfinder: **Lochow, Hans-Joachim, Schumannstrasse 26, D-8011 Baldham (DE)**

EP 0 143 255 B1

**Beschreibung**

Die Erfindung betrifft ein Verfahren und eine Schaltungsanordnung zur zeitlichen Überwachung des Belegtseins von mit einer Fernschreib- und Datenvermittlungsanlage verbundenen Signalumsetzern, welche von der Fernschreib- und Datenvermittlungsanlage her für Verbindungen zwischen Signale mit unterschiedlichen Prozeduren übertragenden Teilnehmereinrichtungen belegt werden und für welche in der Fernschreib- und Datenvermittlungsanlage bei einer Belegung jeweils ein ihren Belegungszustand anzeigendes Belegtzustandssignal gespeichert wird, das erst auf ein von den jeweiligen Signalumsetzer abgegebenes, die Wiederbelegbarkeit anzeigendes Freimeldesignal hin in ein Freizustandssignal geändert wird.

Es ist bereits ein Verfahren zum Herstellen von Verbindungen von an einer Datenvermittlungsanlage angeschlossenen Teilnehmerstellen bzw. Übertragungsleitungen zu Signalumsetzern bekannt (DE-OS-3 030 887). Bei dem bekannten Verfahren wird im Zuge des Aufbaues einer Verbindung zwischen Signale mit unterschiedlichen Prozeduren übertragenden Teilnehmerstellen ein zu diesem Zeitpunkt freier Signalumsetzer belegt. Dieser Signalumsetzer ist dann in der Datenvermittlungsanlage so lange als belegt gekennzeichnet, bis von diesem nach einer erfolgten Weiterleitung der ihm zuvor für eine Signalumsetzung zugeführten Signale ein Freimeldesignal abgegeben wird. Erst bei Empfang dieses Freimeldesignals wird der betreffende Signalumsetzer in der Datenvermittlungsanlage wieder als im Freizustand sich befindend gekennzeichnet. Gibt nun der betreffende Signalumsetzer kein derartiges Freimeldesignal ab, so bleibt dieser in der Datenvermittlunsanlage als belegt gekennzeichnet. Er steht damit für eine Einbeziehung in weitere Verbindungen nicht zur Verfügung. Ein Freimeldesignal kann dabei beispielsweise dadurch ausbleiben, daß der Signalumsetzer die ihm zuvor zugeführten Signale nicht an die in Frage kommende Teilnehmereinrichtung absetzen kann, weil diese zu diesem Zeitpunkt nicht erreichbar ist. Ein Freimeldesignal kann aber auch ausbleiben, wenn in dem betreffenden Signalumsetzer ein Fehler vorliegt, der die Abgabe eines Freimeldesignals verhindert.

Um eine Blockierung eines Signalumsetzers für eine erneute Belegung zu vermeiden, könnte nun, wie bereits in der DE-OS-3 110 791 angedeutet ist, so vorgegangen werden, daß die maximale Belegungsdauer eines Signalumsetzers begrenzt wird. Eine derartige Vorgehensweise würde jedoch dazu führen, daß ein zunächst belegter Signalumsetzer auch dann für eine erneute Belegung freigegeben wird, wenn die Funktion des betreffenden Signalumsetzers gestört ist.

Der Erfindung liegt nun die Aufgabe zugrunde, einen Weg zu zeigen, wie bei einem Verfahren der eingangs genannten Art der Belegungszustand der mit einer Fernschreib- und Datenvermittlungsanlage verbundenen Signalumsetzer in der Fernschreib- und Datenvermittlungsanage mit einem geringen Steuerungsaufwand zeitlich überwacht werden kann.

Gelöst wird die vorstehend aufgezeigte Aufgabe bei einem Verfahren der eingangs genannten Art erfindungsgemäß dadurch, daß mit dem Auftreten eines Belegtzustandssignals in der Fernschreib- und Datenmittlungsanlage für den jeweiligen Signalumsetzer eine zeitliche Überwachung seines Belegtseins eingeleitet wird, daß die zeitliche Überwachung bis zum Empfang eines von dem jeweiligen Signalumsetzer abgegebenen Freimeldesignals durchgeführt wird und daß bei Überschreiten einer vorgegebenen Zeitspanne vor dem Empfang eines Freimeldesignals in der Fernschreib- und Datenvermittlungsanlage der Belegungszustand des jeweiligen Signalumsetzers durch ein entsprechendes Signal für eine gesonderte Auswertung angezeigt wird.

Die Erfindung bringt den Vorteil mit sich, daß Signalumsetzer, bei denen ein Freimeldesignal ausbleibt, nach Ablauf einer vorgegebenen Zeitspanne nicht sofort wieder freigegeben werden, sondern daß hier für eine gesonderte Auswertung entsprechende Signale abgegeben werden. Auf ein derartiges Signal hin kann in der Fernschreib- und Datenvermittlungsanlage eine Überprüfungsroutine gestartet werden, in deren Verlauf die ordnungsgemäße Funktion des dieses Signal verursachenden Signalumsetzers überprüft wird. Stellt sich dabei heraus, daß der betreffende Signalumsetzer fehlerfrei arbeitet, so kann dieser für eine Einbeziehung in weitere Verbindungen freigegeben werden. Anderenfalls werden die für die Behebung des Fehlers erforderlichen Maßnahmen eingeleitet.

Zur Durchführung des Verfahrens gemäß der Erfindung ist es zweckmäßig, daß in der Fernschreib- und Datenvermittlungsanlage ein Register mit den Signalumsetzern individuell zugeordneten Registerzellen vorgesehen ist, in welche jeweils ein Belegtzustandssignal oder ein Freizustandssignal einschreibbar ist, daß mit jeder dieser Registerzellen jeweils eine Zähleinrichtung verbunden ist, welche mit dem Einschreiben eines Belegtzustandssignals in die zugehörige Registerzelle in ihren Zählzustand übergeht, in dem sie bis zum Ändern des Belegtzustandssignals in ein Freizustandssignal verbleibt, und welche bei Erreichen eines bestimmten Zählerstandes ein Zählsignal abgibt, und daß an die Zähleinrichtungen eine Codiereinrichtung angeschlossen ist, welche auf ein ihr zugeführtes Zählsignal hin ein den zugehörigen Signalumsetzer als in seinem Belegtzustand sich befindend bezeichnetes Signal für eine gesonderte Auswertung abgibt. Diese Schaltungsanordnung bringt den Vorteil eines geringen schaltungstechnischen Aufwandes mit sich.

Anhand einer Zeichnung wird die Erfindung nachstehend beispielsweise näher erläutert.

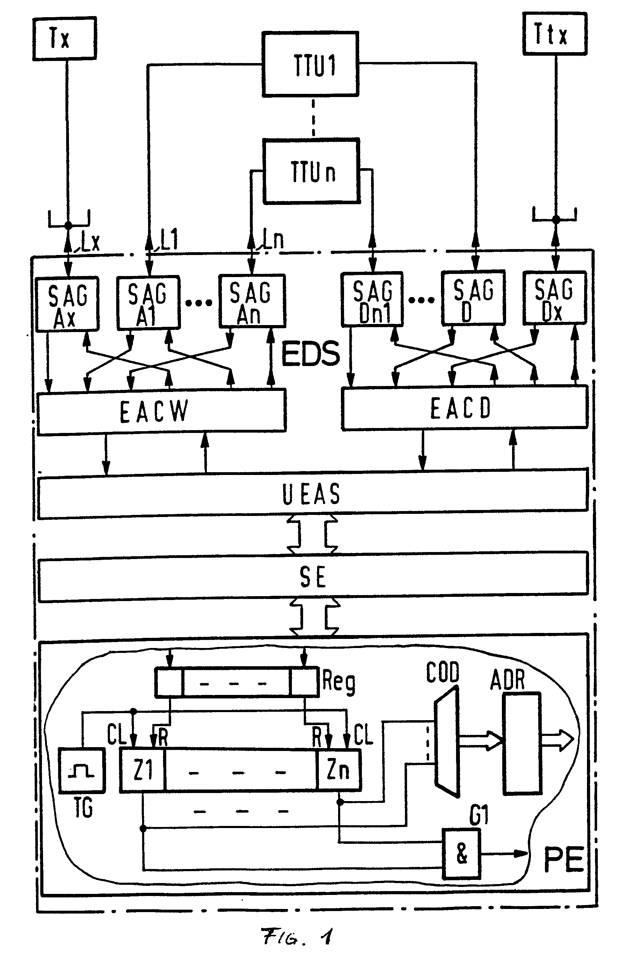

In der Zeichnung ist ausschnittweise eine Fernschreib- und Datenvermittlungsanlage EDS dargestellt. Von dieser Fernschreib- und Datenvermittlungsanlage sind lediglich zu einer ersten Gruppe von Anschlußschaltungen gehörende Anschlußschaltungen SAGAx, SAGA1 bis SAGAn, zu einer zweiten Gruppe von Anschlußschaltungen gehörende Anschlußschaltungen SAGDx, SAGD1 bis SAGDn, den einzelnen Gruppen von Anschlußschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlußschaltungen dienen dazu, digitale Datensignale polaritätswechseweise zu verarbeiten. Die mit dem anderen Eingabe/Ausgabe-Codewandler EACD verbundenen Anschhlußschaltungen dienen zur Verarbeitung von sogenannten Bitgruppen. Diese Bitgruppen sind jeweils eine Mehrzahl von Bits, beispielsweise 8 Bits, umfassende digitale Datensignale, die auch als Envelopes bezeichnet werden. Die Aufgabe dieser Eingabe/Ausgabe-Codewandler besteht unter anderem darin, über die einzelnen Anschlußschaltungen zugeführte Signale zu dem eigentlichen Verarbeitungsteil der Fernschreib- und Datenvermittlungsanlage EDS weiterzuleiten bzw. von diesem Verarbeitungsteil her über die Anchlußschaltungen abzugebende Signale weiterzuleiten. Die Eingabe/Ausgabe-Codewandler sind hierzu mit der Übertragungsablaufsteuerung UEAS verbunden. Diese Übertragungsablaufsteuerung steuert den Signalaustausch zwischen den Eingabe/Ausgabe-Codewandlern und der Speichereinheit SE, die die ihr von der Übertragungsablaufsteuerung zugeführten Signale an die programmsteuereinheit PE weiterleitet. Außerdem gibt die Speichereinheit SE die ihr von der Programmsteuereinheit zugeführten Signale an die Übertragungsablaufsteuerung UEAS ab.

Von den in der Zeichnung angedeuteten Anschlußschaltungen sind einige der Polaritätswechsel verarbeitenden Anschlußschaltungen mit Teilnehmereinrichtungen verbunden, welche digitale Datensignale mit einer ersten Datenübertragungsprozedur abgeben bzw. aufnehmen. Bei diesen Teilnehmereinrichtungen mag es sich um übliche Fernschreib- bzw. Telex-Endgeräte handeln, von denen in der Zeichnung eines mit Tx angedeutet ist. Diese Telex-Endgeräte mögen mit einer Datenübertragungsrate von 50 Bd und unter Ausnutzung des internationalen Telegraphenalphabets Nr. 2 arbeiten, also mit einem Start-Stop-Datenformat. Das Telex-Endgerät Tx ist dabei über eine beispielsweise im Halbduplex-Betrieb ausgenutzte Leitung Lx an der Anschlußschaltung SAGAx angeschlossen. Ein auf dieser Leitung Lx eingetragenes Vielfachzeichen soll andeuten, daß an der betreffenden Anschlußschaltung SAGAx noch mehrere Telex-Endgeräte angeschlossen sein können.

Mit einigen der digitale Datensignale in Form von Bitgruppen bzw. Envelopes verarbeitenden Anschlußschaltungen sind Teilnehmereinrichtungen verbunden, die digitale Nachrichtensignale mit einer zweiten Datenübertragungsprozedur abgeben bzw. aufnehmen, und zwar seriell in Form von Bitgruppen bzw. Envelopes. Bei diesen Teilnehmereinrichtungen mag es sich um sogenannte Bürofernschreibstationen handeln, die auch als Teletex-Endgeräte bezeichnet werden. In der Zeichnung ist ein derartiges Teletex-Endgerät mit Ttx angedeutet. Dieses Teletex-Endgerät ist an der Anschlußschaltung SAGDx angeschlossen. Ein auf der betreffenden Verbindungsleitung eingetragenes Vielfachzeichen soll hierbei wieder andeuten, daß an der betreffenden Anschlußschaltung SAGDx noch mehrere Teletex-Endgeräte angeschlossen sein können. Bezüglich der Teletex-Endgeräte sei angemerkt, daß diese beispielsweise seriell auftretende digitale Datensignale entsprechend dem internationalen Alphabet IA Nr. 5 mit einer Datenübertragungsrate von 2400 bit/s abgeben und aufnehmen können, und zwar als synchrone Datensignale.

Mit der in der Zeichnung dargestellten Fernschreib- und Datenvermittlungsanlage EDS ist eine Anzahl von Signalumsetzern TTU1 bis TTUn verbunden. Von diesen Signalumsetzern sind in der Zeichnung lediglich die Signalumsetzer TTU1 und TTUn dargestellt. Der Aufbau der Signalumsetzer ist in dem Patent DE-PS-2 912 649 bereits beschrieben worden; er wird daher hier nicht näher erläutert. Der Signalumsetzer TTU1 ist über eine Leitung L1 sowohl sendeseitig als auch empfangsseitig mit der Anschlußschaltung SAGA1 verbunden. In entsprechender Weise ist der Signalumsetzer TTUn über die Leitung Ln mit der Anschlußschaltung SAGAn verbunden. Mit weiteren Signaleingängen/Signalausgängen sind die betreffenden Signalumsetzer mit den Anschlußschaltungen SAGD1 bzw. SAGDn verbunden. Über die erwähnten Verbindungsleitungen nehmen die Signalumsetzer die jeweils hinsichtlich der Übertragungsprozedur umzusetzenden digitalen Datensignale auf bzw. geben die jeweils umgesetzten digitalen Datensignale ab. Dies bedeutet, daß die Signalumsetzer die ihnen zugeführten Telexsignale in in den Teletex-Endgeräten wiedergebbare digitale Signale umsetzen und von den Teletex-Endgeräten abgegebene digitale Signale in Telexsignale umsetzen.

Von der genannten Programmsteuereinheit PE ist in der Zeichnung nur der Schaltungsteil dargestellt, der für die zeitliche Überwachung des Belegtseins der Signalumsetzer dient. Dieser Schaltungsteil weist ein Register Reg mit den Signalumsetzern individuell zugeordneten Registerzellen auf, in welche jeweils bei einer Belegung des zugehörigen Signalumsetzers für eine Signalübertragung zwischen einem Teletex-Endgerät und einem Telex-Endgerät ein den Belegungszustand dieses Signalumsetzers anzeigendes Belegtzustandssignal einschreibbar ist. Ein solches Belegtzustandssignal bleibt so lange gespeichert, bis von dem zugehörigen Signalumsetzer nach der Umsetzung der ihm zugeführten Datensignale ein seine Wiederbelegbarkeit anzeigendes Freimeldesignal abgegeben wird. Aufgrund dieses Freimeldesignals wird dann das in der zugeordneten Registerzelle gespeicherte Belegtzustandssignal in ein Freizustandssignal geändert. Dieses Freizustandssignal kann beispielsweise durch ein "0"-Signal gebildet sein. Der Belegungszustand kann dann durch ein "1"-Signal gekennzeichnet sein. Das Einschreiben von Belegtzustandssignalen bzw. Freizustandssignalen in die einzelnen Registerzellen des Registers Reg kann in der bereits in der DE-OS-3 030 887 dargestellten Weise erfolgen.

Jede der Registerzellen des Registers Reg ist mit einem Rücksetzeingang R einer gesonderten Zähleinrichtung verbunden. Diese Zähleinrichtungen sind in der Zeichnung mit Z1 bis Zn bezeichnet. Die Zähleinrichtung Z1 möge dabei dem Signalumsetzer TTU1 zugeordnet sein. In entsprechender Weise möge die Zähleinrichtung Zn dem Signalumsetzer TTUn zugeordnet sein. Diese Zähleinrichtungen sind jeweils mit ihrem Takteingang CL mit dem Ausgang eines Taktgenerators TG verbunden. Ausgangsseitig sind die Zähleinrichtungen Z1 bis Zn einerseits an einen Codierer COD, der ausgangsseitig mit einem Register ADR verbunden ist, und andererseits an Eingänge eines UND-Gliedes G1 angeschlossen.

Die zeitliche Überwachung des Belegtseins der mit der Fernschreib- und Datenvermittlungsanlage EDS verbundenen Signalumsetzer TTU1 bis TTUn erfolgt nun in der Weise, daß mit der Belegung eines Signalumsetzers in die zugehörige Registerzelle des Registers Reg ein Belegtzustandssignal eingetragen wird. Durch dieses Belegtzustandssignal wird die mit der betreffenden Registerzelle verbundene Zähleinrichtung von ihrem Rücksetzzustand in ihren Zählzustand überführt, indem sie die von dem Taktgenerator TG abgegebenen Taktimpulse bis zu einem vorgegebenen Zählerstand zählt. Wird in diesem Zählzustand vor Erreichen des vorgegebenen Zählerstandes von dem zugehörigen Signalumsetzer nach der Weiterleitung der ihm zuvor für eine Umsetzung zugeführten Datensignale ein Freimeldesignal abgegeben, so wird das in der diesem Signalumsetzer zugeordneten Registerzelle des Registers Reg gespeicherte Belegtzustandssignal in ein Freizustandssignal geändert. Dieses Freizustandssignal bewirkt das Rücksetzen der mit dieser Registerzelle verbundenen Zähleinrichtung. Bleibt dagegen ein solches Freizustandssignal aus, so gibt die betreffende Zähleinrichtung bei Erreichen des vorgegebenen Zählerstandes ein entsprechendes Zählsignal an ihrem Ausgang ab.

Bei Auftreten eines derartigen Zählsignals am Ausgang einer der Zähleinrichtungen Z1 bis Zn gibt der mit diesen Zähleinrichtungen verbundene Codierer COD an seinem Ausgang ein Adressensignal ab, das diejenige Zähleinrichtung bezeichnet, von der das Zählsignal abgegeben worden ist. Da jeder dieser Zähleinrichtungen jeweils ein Signalumsetzer (TTU1 bis TTUn) zugeordnet ist, wird durch ein solches Adressensignal auch derjenige Signalumsetzer bezeichnet, von dem im Belegungszustand innerhalb einer vorgegebenen Zeitspanne kein Freimeldesignal abgegeben worden ist.

Werden von mehreren Zähleinrichtungen gleichzeitig Zählsignale abgegeben, so berücksichtigt der Codierer COD lediglich eines der Zählsignale und gibt eine diesem Zählsignal entsprechende Adresse an seinem Ausgang ab. Der Codierer kann hierfür beispielsweise aus einem oder mehreren Bausteinen des Typs SN 74147 der Firma Texas Instruments aufgebaut werden. Bei Verwendung dieser Bausteine sind von den Zähleinrichtungen die Zählsignale in Form von "0"-Signalen abzugeben. Die bei Auftreten von mehreren Zählsignalen von dem Codierer zunächst nicht berücksichtigten Zählsignale gehen nicht verloren; sie werden zu einem späteren Zeitpunkt berücksichtigt.

Ein von dem Codierer COD abgegebenes Adressensignal wird in das bereits erwähnte Register ADR übernommen und bleibt hier für eine anschließende Auswertung durch eine Überwachungsroutine zunächst zwischengespeichert. Zum Anstoß dieser Überwachungsroutine gibt das mit den Zähleinrichtungen verbundene UND-Glied G1 bei Auftreten eines Zählsignals ein Steuersignal an seinem Ausgang ab. Dieses Steuersignal besteht aus einem "0"-Signal, wenn von den Zähleinrichtungen Z1 bis Zn als Zählsignale "0"-Signale abgegeben werden.

Nach Anstoß der Überwachungsroutine wird das in dem Register ADR zwischengespeicherte Adressensignal ausgelesen. Anschließend wird der durch dieses Adressensignal bezeichnete Signalumsetzer auf seine fehlerfreie Funktion hin überprüft. Stellt sich dabei heraus, daß dieser Signalumsetzer fehlerfrei arbeitet und daß ein Freimeldesignal von diesem lediglich deshalb nicht abgegeben worden ist, weil das Endgerät, für das die von dem Signalumsetzer umgesetzten Datensignale bestimmt sind, nicht erreichbar ist, so wird das in der dem betreffenden

Signalumsetzer zugeordneten Registerzelle des Registers Reg gespeicherte Belegtzustandssignal in ein Freizustandssignal geändert. Damit steht dann dieser Signalumsetzer für eine erneute Belegung wieder zur Verfügung. Arbeitet dagegen dieser überprüfte Signalumsetzer fehlerhaft, so werden von der Überwachungsroutine die für eine Fehlerbehebung erforderlichen Maßnahmen eingeleitet. Diese können beispielsweise darin bestehen, daß der betreffende Signalumsetzer in einen definierten Anfangszustand gesetzt und anschließend wieder freigegeben wird oder daß dieser Signalumsetzer für eine Fehlerbehebung außer Betrieb genommen wird.

**Patentansprüche**

1. Verfahren zur zeitlichen Überwachung des Belegtseins von mit einer Fernschreib- und Datenvermittlungsanlage (EDS) verbundenen Signalumsetzern (TTU1 bis TTUn), welche von der Fernschreib- und Datenvermittlungsanlage her für Verbindungen zwischen Signale mit unterschiedlichen Prozeduren übertragenden Teilnehmereinrichtungen (Tx, Ttx) belegt werden und für welche in der Fernschreib- und Datenvermittlungsanlage bei einer Belegung jeweils ein ihren Belegungszustand anzeigendes Belegtzustandssignal gespeichert wird, das erst auf ein von dem jeweiligen Signalumsetzer abgegebenes, die Wiederbelegbarkeit anzeigendes Freimeldesignal hin in ein Freizustandssignal geändert wird, <u>dadurch gekennzeichnet,</u> daß mit dem Auftreten eines Belegtzustandssignals in der Fernschreib- und Datenvermittlungsanlage für den jeweiligen Signalumsetzer eine zeitliche Überwachung seines Belegtseins eingeleitet wird,

daß die zeitliche Überwachung bis zum Empfang eines von dem jeweiligen Signalumsetzer abgegebenen Freimeldesignals durchgeführt wird

und daß bei Überschreiten einer vorgegebenen Zeitspanne vor dem Empfang eines Freimeldesignals in der Fernschreib- und Datenvermittlungsanlage der Belegungszustand des jeweiligen Signalumsetzers durch ein entsprechendes Signal für eine gesonderte Auswertung angezeigt wird.

2. Schaltungsanordnung zur Durchführung des Verfahrens nach Anspruch 1, <u>dadurch gekennzeichnet,</u> daß in der Fernschreib- und Datenvermittlungsanlage (EDS) ein Register (Reg) mit den Signalumsetzern (TTU1 bis TTUn) individuell zugeordneten Registerzellen vorgesehen ist, in welche jeweils ein Belegtzustandssignal oder ein Freizustandssignal einschreibbar ist, daß mit jeder dieser Registerzellen jeweils eine Zähleinrichtung (Z1 bis Zn) verbunden ist, welche mit dem Einschreiben eines Belegtzustandssignals in die zugehörige Registerzelle in ihren Zählzustand übergeht, in dem sie bis zum Ändern des Belegtzustandssignals in ein Freizustandssignal verbleibt, und welche bei Erreichen eines bestimmten Zählerstandes ein Zählsignal abgibt, und daß an die Zähleinrichtungen eine Codiereinrichtung (COD, G1, ADR) angeschlossen ist, welche auf ein ihr zugeführtes Zählsignal hin ein den zugehörigen Signalumsetzer als in seinem Belegtzustand sich befindend bezeichnendes Signal für eine gesonderte Auswertung abgibt.

**Claims**

1. Method for time-monitoring the seizure of signal converters (TTU1 to TTUn) connected to a telegraph and data exchange (EDS) which are seized by the telegraph and data exchange for connections between subscriber devices (Tx, Ttx) transmitting signals with different procedures, and for which a busy state signal indicating its seized state is stored upon each seizure in the telegraph and data exchange, which busy state signal is changed to a free state signal only in response to a release signal which is output by the respective signal converter and which indicates that it can be seized again, characterized in that, with the appearance of a busy state signal in the telegraph and data exchange, a time-monitoring of its seizure is initiated for the respective signal converter, in that the time-monitoring is performed until a release signal output by the respective signal converter is received, and in that, when a predetermined time span has been exceeded before receiving a release signal in the telegraph and data exchange, the seized state of the respective signal converter is indicated by a corresponding signal for a separate evaluation.

2. Circuit arrangement for carrying out the method according to Claim 1, characterized in that there is provided in the telegraph and data exchange (EDS) a register (Reg) with register cells which are assigned individually to the signal converters (TTU1 to TTUn), and into which in each case a busy state signal or a free state signal can be written, in that there is connected to each of these register cells in each case a counting device (Z1 to Zn) which switches over to its counting state when a busy state signal is written into the associated register cell, in which state it remains until the busy state signal is changed into a free state signal, and which outputs a counting signal when a specified counter state is reached, and in that there is connected to the counting devices a coding device (COD, G1, ADR) which, in response to a counting signal supplied to it, outputs for a separate evaluation a signal indicating that the associated signal converter is in its seized state.

## Revendications

1. Procédé de contrôle temporel de l'état d'occupation des convertisseurs de signaux (TTU1 à TTUn), qui sont reliés à une installation (EDS) de télex et de commutation de données et sont occupés, à partir de l'installation de télex et de commutation de données, pour des liaisons entre les dispositifs d'abonnés (Tx, Ttx) transmettant des signaux selon des procédures différentes, et pour lesquels, dans l'installation de télex et de commutation de données, dans le cas d'une occupation, un signal d'état occupé indiquant l'état occupé d'un convertisseur est respectivement mémorisé, ce signal étant converti en un signal d'état libre uniquement lors de l'apparition d'un signal de signalisation d'état libre, délivré par le convertisseur respectif de signaux et indiquant la possibilité d'une nouvelle occupation, caractérisé par le fait que, lors de l'apparition d'un signal d'état occupé dans l'installation de télex et de commutation de données, un contrôle temporel de l'état occupé du convertisseur respectif de signaux est déclenché, que le contrôle temporel est exécuté jusq'à la réception d'un signal de signalisation d'état libre délivré par le convertisseur respectif de signaux, et que, lors du dépassement d'un intervalle de temps prédéterminé avant la réception d'un signal de signalisation d'état libre dans l'installation de télex et de commutation de données, l'état d'occupation du convertisseur respectif de signaux est indiqué au moyen d'un signal correspondant pour une évaluation particulière.

2. Montage pour la mise en oeuvre du procédé suivant la revendication 1, caractérisé par le fait que dans l'installation (EDS) de télex et de commutation de données, il est prévu un registre (Reg), qui comporte des cellules, associées individuellement aux convertisseurs de signaux (TTU1 à TTUn) et dans lesquelles un signal d'état occupé ou un signal d'état libre peut être respectivement enregistré, qu'à chacune de ces cellules du registre est associé un dispositif respectif de comptage (Z1 à Zn), qui, lors de l'enregistrement d'un signal d'état occupé dans la cellule associée du registre, passe dans son état de comptage, dans lequel il subsiste jusqu'au passage du signal d'état occupé en un signal d'état libre, et qui délivre un signal de comptage une fois qu'un état de comptage déterminé est atteint, et qu'aux dispositifs de comptage est raccordé un dispositif de codage (COD, G1, ADR), qui, lors de l'apparition d'un signal de comptage qui lui est envoyé, délivre, pour une évaluation particulière, un signal indiquant que le convertisseur associé de signaux se trouve dans son état occupé.

*FIG. 1*